Europäisches Patentamt

**European Patent Office**

**Office européen des brevets**

(19)

(11) Veröffentlichungsnummer: **0 043 146**
**B1**

(12) **EUROPÄISCHE PATENTSCHRIFT**

(45) Veröffentlichungstag der Patentschrift:
30.05.84

(51) Int. Cl.³: **H 02 P 13/24,** H 02 M 7/10,
H 02 J 3/36

(21) Anmeldenummer: 81200489.3

(22) Anmeldetag: 08.05.81

(54) **Verfahren zur Inbetriebnahme einer von mehreren in Reihe geschalteten Stromrichtergruppen einer Hochspannungs-Gleichstrom-Uebertragungsanlage.**

(30) Priorität: 25.06.80 DE 3023698

(43) Veröffentlichungstag der Anmeldung:
06.01.82 Patentblatt 82/1

(45) Bekanntmachung des Hinweises auf die Patenterteilung:
30.05.84 Patentblatt 84/22

(84) Benannte Vertragsstaaten:
CH DE GB LI SE

(56) Entgegenhaltungen:
DE - A - 1 613 638
DE - A - 2 533 773
DE - A - 2 608 973

(73) Patentinhaber: **BBC Aktiengesellschaft Brown, Boveri & Cie., Haselstrasse, CH-5401 Baden (CH)**

(72) Erfinder: **Häusler, Michael, Dr., Brunnengasse 19, D-6945 Hirschberg (DE)**
Erfinder: **Kanngiesser, Karl-Werner, Franconvillestrasse 19, D-6806 Viernheim (DE)**

# Beschreibung

Die Erfindung bezieht sich auf ein Verfahren zur Inbetriebnahme einer mehreren gleichstrommässig in Reihe und wechselstrommässig parallelgeschalteten Stromrichtergruppen eines im Gleichrichter- bzw. Wechselrichterbetrieb arbeitenden Stromrichters einer Hochspannungs-Gleichstrom-Übertragungsanlage, wobei jeder Stromrichtergruppe ein Nebenwegschalter parallel liegt.

Derartige Verfahren sind aus der DE-AS Nr. 2514227 und der DE-OS Nr. 2512364 bekannt.

Für in Reihe geschaltete Stromrichtergruppen tritt betriebsmässig die Aufgabe auf, während des Betriebes einer Stromrichtergruppe eine weitere in den Stromkreis einzufügen, ohne den Betrieb der ersten zu unterbrechen. Hierbei soll die Leistungsübertragung entweder überhaupt nicht oder in vorher bestimmter Weise — etwa mit linearem Anstieg in einer gewünschten, einstellbaren Zeit — beeinflusst werden. Es ist erwünscht, dass die hierbei auftretenden Blindleistungsschwankungen in den Kopfstationen möglichst kurzdauernd gehalten werden oder dass — falls eine Erhöhung der Wirkleistung erfolgt — die Blindleistung etwa proportional mit der Wirkleistung anwächst.

Die neu in Betrieb zu nehmende Stromrichtergruppe ist anfänglich von einem Nebenwegschalter überbrückt, der während der Inbetriebnahme geöffnet werden muss. Der Schalterstrom muss dabei ohne Gefahr für den Schalter in die Stromrichtergruppe kommutiert werden.

Bei den bekannten Verfahren wird dies mit Hilfe einer besonderen Anfahrregelung erreicht. Dies hat jedoch den Nachteil, dass vor Öffnen des Nebenwegschalters im Stromrichter der volle, in der Gleichstromleitung fliessende Strom eingeregelt wird. Während der Einregelzeit arbeitet die in Betrieb zu nehmende Stromrichtergruppe im Nullspannungsbetrieb. Ihre Scheinleistung ist daher praktisch reine Blindleistung und bei Nennstrom annäherungsweise so gross wie ihre Nennleistung.

In der Einregelzeit des Anfahrreglers von ca. 0,5 bis 1 s haben die Generatoren im Netz Gelegenheit, die zusätzlich benötigte Blindleistung einzustellen. Sobald der Nebenwegschalter geöffnet wird und die in Betrieb genommene Stromrichtergruppe mit ihrer Spannung hochfährt, verringert sich die Stromrichterblindleistung. Bei zwei in Reihe geschalteten Stromrichtergruppen führt der Leitungspol am Ende des Ausgleichsvorganges bei konstant gehaltener Übertragungsleistung den halben Strom bei doppelter Spannung. Die Blindleistung beider Stromrichtergruppen ist etwa genau so gross wie die ursprüngliche Stromrichterblindleistung (mit vollem Strom und halber Leitungsspannung). Die Generatoren müssen daher wieder auf ihren alten Blindleistungswert zurückgefahren werden. Dies gilt auch für die Inbetriebnahme von mehr als zwei in Reihe geschalteten Stromrichtergruppen. Um einen Blindleistungsüberschuss und damit Überspannungen während des Hochfahrens des in Betrieb zu nehmenden Stromrichters zu vermeiden, müsste die Hochsteuerung der Gleichspannung mit dem bekannten Verfahren nachteiligerweise so langsam erfolgen, dass die Blindleistungsregelung des Netzes zu folgen vermag.

Der Erfindung liegt die Aufgabe zugrunde, die mit dem bekannten Verfahren sich ergebenden Blindleistungsschwankungen zwischen Netz und Stromrichter zu vermeiden und den Inbetriebnahmevorgang zu vereinfachen.

Diese Aufgabe wird bei einem im Gleichrichterbetrieb arbeitenden Stromrichter dadurch gelöst, dass die Steuerimpulse der in Betrieb zu nehmenden Stromrichtergruppe im Bereich von ca. 100 bis $115°_{el}$ eingestellt werden, dass der Nebenwegschalter dieser Stromrichtergruppe anschliessend einen Öffnungsbefehl erhält, dass die Steuerimpulse nach erfolgter Öffnung des Nebenwegschalters nach einer vorgebbaren linearen Rampenfunktion in den Gleichrichterbereich verschoben werden und dass anschliessend die Steuerimpulse durch einen Polstromregler vorgegeben werden.

Bei einem im Wechselrichterbetrieb arbeitenden Stromrichter wird diese Aufgabe erfindungsgemäss dadurch gelöst, dass die Steuerimpulse der in Betrieb zu nehmenden Stromrichtergruppe im Bereich von ca. 100 bis $115°_{el}$ eingestellt werden, dass der Nebenwegschalter dieser Stromrichtergruppe anschliessend einen Öffnungsbefehl erhält, dass die Steuerimpulse nach erfolgter Öffnung des Nebenwegschalters mit einer vorgebbaren linearen Rampenfunktion zunächst in den Gleichrichterbetrieb bis zu einem vorgebbaren Steuergrenzwinkel von ca. $85°_{el}$ verschoben werden, anschliessend eine Rücksteuerung der Steuerimpulse in den Wechselrichterbetrieb bis zum grösstmöglichen Steuerwinkel erfolgt und dass anschliessend die Steuerimpulse durch einen Löschwinkelregler vorgegeben werden.

Die mit der Erfindung erzielbaren Vorteile bestehen insbesondere darin, dass ein eigener Anfahrregler nicht notwendig ist und die Inbetriebnahme des Stromrichters verkürzt wird.

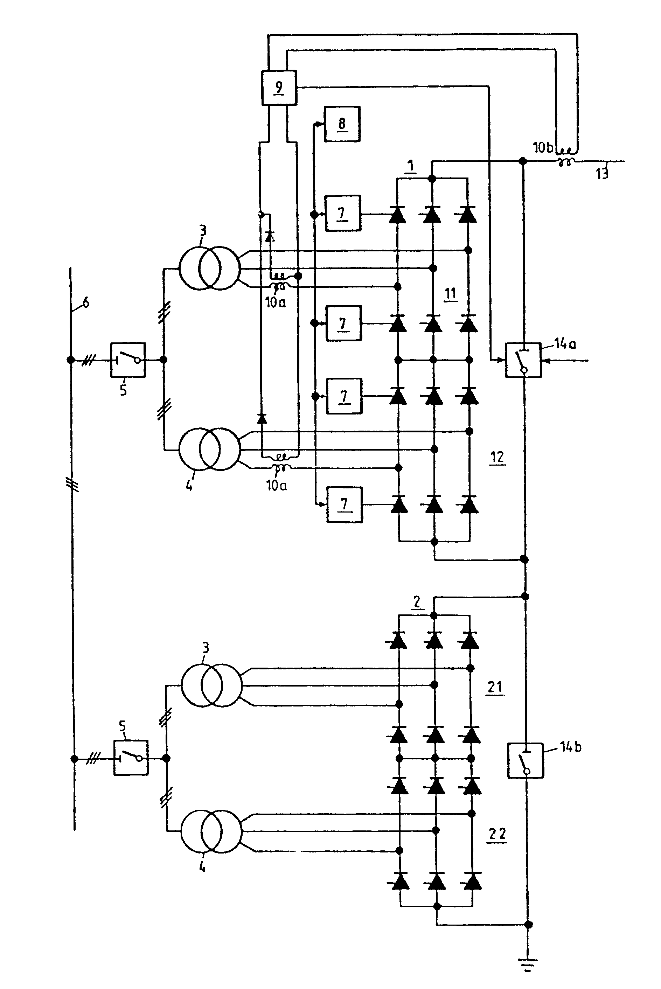

Das erfindungsgemässe Verfahren wird nachfolgend anhand der Zeichnung erläutert. In der Zeichnung ist ein Stationspol einer Stromrichterstation dargestellt. Der Stationspol enthält zwei Stromrichtergruppen 1 und 2, die wechselspannungsseitig jeweils an zwei Stromrichtertransformatoren 3 und 4 angeschlossen sind. Die Stromrichtertransformatoren 3 und 4 können jeweils über einen Leistungsschalter 5 mit einem Drehstromnetz 6 verbunden sein.

Jede Stromrichtergruppe 1 bzw. 2 kann beispielsweise aus zwei (oder mehr) Stromrichterbrücken 11 und 12 bzw. 21 und 22 bestehen. Die Stromrichtergruppen 1 und 2 liegen gleichstrommässig in Serie, wobei die Endpunkte der Serienschaltung zum einen mit einer Gleichstromleitung 13, zum anderen mit der geerdeten Mitte der Stromrichterstation verbunden sind.

Als Ventile können für die Stromrichterbrücken 11, 12, 21, 22 jeweils Thyristoren bzw. Ketten von seriengeschalteten Thyristoren eingesetzt werden. Die Steuerelektroden jeder Thyristorkette sind mit einer Steuerschaltung 7 verbunden, wobei in der Zeichnung nur die Steuerschaltungen 7 für eine Phase der Stromrichtergruppe 1 dargestellt sind. Die Steuerschaltungen 7 sind an ein übergeordnetes Steuersignalgerät 8 angeschlossen. Ein Vergleichsglied 9 erhält über zwischen den Stromrichtertransformatoren 3 und 4 und den Stromrichterbrücken 11, 12, 21, 22 angeordnete Stromwandler 10a einen gleichgerichteten Wechselstromwert und über einen in der Gleichstromleitung 13 angeordneten Gleichstromwandler 10b einen Gleichstromwert zugeführt. In der Zeichnung sind dabei jeweils nur die Stromwandler 10a für eine Phase der Stromrichtergruppe 1 dargestellt. Durch das Ausgangssignal des Vergleichsgliedes 9 werden jeweils an die Gleichspannungspole der Stromrichtergruppen 1 und 2 angeschlossene Nebenwegschalter 14a, 14b beeinflusst. Diese Nebenwegschalter 14a, 14b können aus mechanischen Schaltern bekannter Bauart bestehen.

Für die nachfolgende Beschreibung des Verfahrens wird angenommen, dass die Stromrichtergruppe 2 in Betrieb ist, d.h. Nebenwegschalter 14b ist geöffnet. Die Stromrichtergruppe 1 soll in Betrieb genommen werden. Der Nebenwegschalter 14a ist also vorerst noch geschlossen. Während der Inbetriebnahme der Stromrichtergruppe 1 soll der Betrieb der Stromrichtergruppe 2 nicht gestört werden. In einem ersten Schritt werden mit Hilfe des Steuersignalgerätes 8 und der Steuerschaltungen 7 die Steuerimpulse der in Betrieb zu nehmenden Stromrichtergruppe 1 im Bereich von 100 bis 115°$_{el}$ eingestellt. Anschliessend erhält der Nebenwegschalter 14a einen Öffnungsbefehl.

Falls die Stromrichtergruppe 1 im Gleichrichterbetrieb arbeiten soll, falls also die Inbetriebnahme auf der Gleichrichterseite erfolgt, werden die Steuerimpulse für die Thyristoren der Stromrichterbrücken 11 und 12 nach einer linearen Rampenfunktion, d.h. mit vorgegebenem linearen Anstieg in einer gewünschten einstellbaren Zeit, in den Gleichrichterbereich verschoben, sobald der Hilfskontakt des Nebenwegschalters 14a die Öffnung des Schalters 14a rückmeldet.

Falls die Stromrichtergruppe 1 im Wechselrichterbetrieb arbeiten soll, falls also die Inbetriebnahme auf der Wechselrichterseite erfolgt, werden die Steuerimpulse für die Thyristoren der Stromrichterbrücken 11 und 12 mit einer einstellbaren Rampe zunächst in den Gleichrichterbetrieb mit einem einstellbaren Grenzwinkel bei ca. 85°$_{el}$ und danach zurück in den Wechselrichterbetrieb bis zum grösstmöglichen Steuerwinkel gesteuert, sobald der Hilfskontakt des Nebenwegschalters 14a die Öffnung des Schalters 14a rückmeldet. Zur Vorgabe der Rampenfunktionen wird die Leistungsübertragung in vorher bestimmter Weise — etwa mit linearem Anstieg in einer gewünschten einstellbaren Zeit — beeinflusst. Ferner wird der Strom durch den Schalter 14a ohne Gefahr für den Schalter in die Stromrichtergruppe 1 kommutiert.

In beiden Fällen erfolgt eine Ablösung der Steuerwinkelvorgabe nach Ablauf der Rampenfunktion. Im ersten Fall gibt danach die Steuerspannung eines Polstromreglers, im zweiten Fall ein Löschwinkelregler, die Steuerimpulse vor.

Ferner wird der über die Stromwandler 10a erfasste und mit Hilfe von Dioden gleichgerichtete Strom in der Leitung zwischen den Stromrichtertransformatoren 3 bzw. 4 und den Stromrichterbrücken 11 bzw. 12 mit dem über den Stromwandler 10b erfassten Gleichstrom in der Gleichstromleitung 13 mit Hilfe der Vergleichsgliedes 9 verglichen. Bei einer länger dauernden Abweichung beider Ströme wird dem Nebenwegschalter 14a wieder ein Einschaltbefehl sowie für die Stromrichtergruppe 1 eine Nebenwegansteuerung mit anschliessender Steuerimpulsesperre gegeben.

Unvermeidlich ist auch mit diesem Verfahren ein Blindlaststoss, der allerdings entsprechend der eingestellten Hochfahrrampe so kurz gehalten werden kann, dass die Netzregelung der Blindleistung hiervon praktisch nicht beeinflusst wird. Mit dem Blindlaststoss verbunden ist eine kurz dauernde Absenkung der Netzspannung. Überspannungen werden vermieden.

Bei einer Inbetriebnahme auf der Wechselrichterseite ist es zweckmässig, zur Vermeidung von Kippungen bei dem Regler der Wechselrichterstation eine Aufschaltung vorzusehen, welche eine kurzzeitige Vorsteuerung des Steuerwinkels erzeugt, sobald die Verschiebung der Steuerimpulse des in Betrieb zu nehmenden Stromrichters beginnt. Die hierbei hervorgerufene vorübergehende Absenkung der Gleichspannung auf der Wechselrichterseite ist bedeutungslos, da der Stromregler auf der Gleichrichterseite hierauf mit einer entsprechenden Absenkung der Spannung auf der Gleichrichterseite reagiert.

Voraussetzung für das Gelingen der Inbetriebnahme ist, dass der Nebenwegschalter 14a ordnungsgemäss schaltet. Zum Schutz des Schalters 14a bei Schaltversagen dient der vorgesehene Vergleich der Ströme auf der Drehstrom- und Gleichstromseite des in Betrieb genommenen Stromrichters. Wenn eine Spannungsmessung der Stromrichtergruppe vorhanden ist, kann als zusätzliches Kriterium für das Gelingen der Kommutierung das Vorhandensein der 12pulsigen Stromrichtergruppenspannung verwendet werden.

Die Ausserbetriebnahme der Stromrichtergruppe 1 erfolgt durch eine Nebenwegansteuerung des Stromrichters und Einschalten des Nebenwegschalters 14a. Vorher wird zweckmässigerweise die Polspannung durch Heruntersteuern der Spannung der Stromrichtergruppe 1 auf Null an die neue Betriebsweise angepasst. Es ist allerdings auch möglich, eine Nebenwegansteuerung ohne vorangegangene Herabsteuerung der Polspannung durchzuführen. Dann aber muss der Gleichstrom vorher entsprechend (bei zwei Gruppen also auf die Hälfte) reduziert worden sein, um Wirkleistungssprünge zu vermeiden. Ein besonderer Ausserbetriebnahmeregler ist also nicht erforderlich.

## Patentansprüche

1. Verfahren zur Inbetriebnahme einer von mehreren gleichstrommässig in Reihe und wechselstrommässig parallelgeschalteten Stromrichtergruppen eines im Gleichrichterbetrieb arbeitenden Stromrichters einer Hochspannungs-Gleichstrom-Übertragungsanlage, wobei jeder Stromrichtergruppe ein Nebenwegschalter parallel liegt, dadurch gekennzeichnet, dass die Steuerimpulse der in Betrieb zu nehmenden Stromrichtergruppe im Bereich von ca. 100 bis 115°$_{el}$ eingestellt werden, dass der Nebenwegschalter dieser Stromrichtergruppe anschliessend einen Öffnungsbefehl erhält, dass die Steuerimpulse nach erfolgter Öffnung des Nebenwegschalters nach einer vorgebbaren linearen Rampenfunktion in den Gleichrichterbereich verschoben werden, und dass anschliessend die Steuerimpulse durch einen Polstromregler vorgegeben werden.

2. Verfahren zur Inbetriebnahme einer von mehreren gleichstrommässig in Reihe und wechselstrommässig parallelgeschalteten Stromrichtergruppen eines im Wechselrichterbetrieb arbeitenden Stromrichters einer Hochspannungs-Gleichstrom-Übertragungsanlage, wobei jeder Stromrichtergruppe ein Nebenwegschalter parallel liegt, dadurch gekennzeichnet, dass die Steuerimpulse der in Betrieb zu nehmenden Stromrichtergruppe im Bereich von ca. 100 bis 115°$_{el}$ eingestellt werden, dass der Nebenwegschalter dieser Stromrichtergruppe anschliessend einen Öffnungsbefehl erhält, dass die Steuerimpulse nach erfolgter Öffnung des Nebenwegschalters mit einer vorgebbaren Rampenfunktion zunächst in den Gleichrichterbetrieb bis zu einem vorgebbaren Steuergrenzwinkel von ca. 85°$_{el}$ verschoben werden, anschliessend eine Rücksteuerung der Steuerimpulse in den Wechselrichterbetrieb bis zum grösstmöglichen Steuerwinkel erfolgt, und dass anschliessend die Steuerimpulse durch einen Löschwinkelregler vorgegeben werden.

3. Verfahren nach wenigstens einem der vorstehenden Ansprüche, dadurch gekennzeichnet, dass der gleichgerichtete Strom in den Zuleitungen der in Betrieb zu nehmenden Stromrichtergruppe mit dem Strom in der Gleichstromleitung verglichen wird, und dass bei einer länger dauernden Abweichung beider Ströme dem Nebenwegschalter ein Einschaltbefehl sowie für den Stromrichter eine Nebenwegansteuerung mit anschliessender Steuerimpulssperre gegeben wird.

## Claims

1. A process for putting into operation one of several power converter groups, connected in series with respect to direct current and connected in parallel with respect to alternating current, of a power converter, operating in rectifier mode, of a high-voltage direct-current transmission system, each power converter group having connected in parallel with it one bypass switch, characterised in that the trigger pulses of the power converter group to be put into operation are set within a range of approximately 100 to 115°$_{el}$, that the bypass switch of this power converter group subsequently receives a command to open, that the trigger pulses, after the bypass switch has opened, are shifted into the rectifier area in accordance with a predeterminable linear ramp function, and that subsequently the trigger pulses are predetermined by a fiels current regulator.

2. A process for putting into operation one of several power converter groups, connected in series with respect to direct current and connected in parallel with respect to alternating current, of a power converter, operating in rectifier mode, of a high-voltage direct-current transmission system, each power converter group having connected in parallel with it one bypass switch, characterised in that the trigger pulses of the power converter group to be put into operation are set within a range of approximately 100 to 115°$_{el}$, that the bypass switch of this power converter group subsequently receives a command to open, that the trigger pulses, after the bypass switch has opened initially, are shifted with a predeterminable linear ramp function into rectifier operation up to a predeterminable trigger delay limit angle of approximately 85°$_{el}$, after which the trigger pulses are driven back into alternating-current converter operation up to the largest possible trigger delay angle, and that subsequently the trigger pulses are predetermined by an extinction angle regulator.

3. A process according to at least one of the preceding claims, characterised in that the rectified current in the feed lines of the power converter group to be put into operation is compared with the current in the direct-current line, and that, if the two currents deviate for a long period, the bypass switch is supplied with a command for switching on and the power converter is supplied with bypass drive followed by a trigger-pulse inhibit function.

## Revendications

1. Procédé de mise en service d'un parmi plusieurs groupes convertisseurs de courant connectés en série en courant continu et en parallèle en courant alternatif d'un convertisseur de courant travaillant en mode redresseur d'une installation de transmission de courant continu à haute tension, un commutateur de shuntage étant connecté en parallèle à chaque groupe convertisseur de courant, caractérisé en ce que les impulsions de commande du groupe convertisseur de courant à mettre en service sont réglées dans la zone d'environ 100 à 115°$_{el}$, le commutateur de shuntage de ce groupe convertisseur de courant recevant ensuite un ordre d'ouverture, les impulsions de commande, au terme de l'ouverture du commutateur de shuntage, étant déplacées dans la zone de redresseur selon une fonction en rampe linéaire pouvant être préétablie et les impulsions de commande étant ensuite préétablies par un régulateur de courant polaire.

2. Procédé de mise en service d'un parmi plusieurs groupes convertisseurs de courant connectés en série en courant continu et en parallèle en courant alternatif d'un convertisseur de courant travaillant en mode redresseur d'une installation de transmission de courant continu à haute tension, un commutateur de shuntage étant connecté en parallèle à chaque groupe convertisseur de courant, caractérisé en ce que les impulsions de commande du groupe convertisseur de courant à mettre en service sont réglées dans la zone d'environ 100 à 115°$_{el}$, le commutateur de shuntage de ce groupe convertisseur de courant recevant. ensuite un ordre d'ouverture, les impulsions de commande, au terme de l'ouverture du commutateur de shuntage, étant déplacées selon une fonction en rampe linéaire pouvant être préétablie, d'abord dans le mode redresseur jusqu'à un angle limite de commande pouvant être préétabli d'environ 85°$_{el}$, ce qui est suivi d'une commande en retour des impulsions de commande dans le mode de convertisseur continu/alternatif jusqu'à l'angle de commande le plus grand possible et les impulsions de commande étant ensuite préétablies par un régulateur d'angle d'extinction.

3. Procédé suivant au moins l'une des revendications précédentes, caractérisé en ce que le courant redressé dans les conducteurs d'alimentation du groupe convertisseur de courant à mettre en service est comparé au courant présent dans le conducteur de courant continu et que, dans le cas d'une déviation de durée relativement longue des deux courants, un ordre d'enclenchement est émis pour le commutateur de shuntage, de même qu'une commande de shuntage suivie d'un blocage des impulsions de commande pour le convertisseur de courant.